# EUROPEAN PATENT SPECIFICATION

(11) **EP 2 084 714 B1**
(45) Date of publication and mention of the grant of the patent: **21.07.2010**
(21) Application number: 07819255.6
(22) Date of filing: 23.10.2007
(51) Int. Cl.: G21F 9/16, C02F 11/14

(54) **ENCAPSULATION OF WASTE FOR STORAGE**
EINKAPSELUNG VON ABFALL ZUR LAGERUNG
ENCAPSULATION DES DÉCHETS EN VUE D'UN STOCKAGE

(30) Priority: 26.10.2006 US 863037 P
(43) Date of publication of application: 05.08.2009
(73) Proprietor: BNS Nuclear Services Ltd., Irlam Manchester M44 5AY (GB)
(72) Inventor: KIRK, Douglas, Warrington Cheshire WA3 7JR (GB)
(74) Representative: Reynolds, Julian David
(86) International application number: PCT/EP2007/009195
(87) International publication number: WO 2008/049586

(56) References cited:
- EP-A- 0 007 818
- US-A- 4 168 243
- US-A- 4 246 233

## Description

The present invention relates to the conditioning of Intermediate and Low Level Radioactive Waste materials, and more particularly to apparatus, methods and systems for encapsulation of waste materials for long term storage.

It is well known that certain waste by products of industrial processes, especially radioactive waste materials generated by nuclear processing plants, and other hazardous waste material, need to be safely and securely disposed of, typically by encapsulation techniques within containers, in a way that is suited to long term storage (e.g. in a robust containment, until the radioactivity has decayed to non-hazardous levels).

More recently, an example of such storage involves mixing the radioactive hazardous waste - typically in the form of wet sludge with dry encapsulation powders, such as cement - in a container such as a metal drum having an integral mixing paddle. The mixture is allowed to cure in the drum. The purpose of this is to encapsulate the (radioactive) waste in an (eventually) solid material within the drum; the drums can then be disposed in a suitable storage location, such as an underground storage site. Such a prior art method is known, for example, from US-A-4,168,243.

A problem with known systems is that an internal paddle is used within the drum for mixing. In the case where the paddle is re-used, cleaning of the paddle is required, which is a time consuming process and generates radioactive secondary waste. In the case where the paddle is left in the drum and disposed of therewith, extra parts (paddles) are required for each drum.

A further problem is that through the use of moving paddles within the drum, the preloading of the drum with additional solid articles of waste (e.g., metal items and fuel element debris, etc.), prior to adding the sludge waste and the dry grout powders, is prevented, as the solids would block/hinder the paddles' movement and hence prevents the incorporation of solid waste in the same drum thus reducing the overall amount of waste stored in the drum, per unit volume.

A further problem is that, with the use of such drums, the amount of stored volume of waste is not optimized in relation to the volume utilisation in the store.

The present invention seeks to address the aforementioned and other issues, and provide improved techniques for the encapsulation of waste for long term storage by a process that is insensitive to the geometry of the long term storage container.

According to one aspect of the present invention there is provided apparatus for encapsulating waste material in a container for long term storage, comprising: a container, a first storage vessel, for holding waste material; a second storage vessel, for holding encapsulation medium; a static vane in-line mixer, coupled for receiving waste material, and coupled to the second storage vessel, and producing, in use, a mixture of the waste material and encapsulation medium; wherein the in-line mixer is arranged for filling the container and wherein the in-line mixer comprises a disposable component located inside the container mounted on an internal surface of the container.

Preferably, the apparatus further includes a dewatering unit (108), coupled for receiving waste material from the first vessel (106) and outputting dewatered waste material; wherein the inline mixer (112) is coupled to the dewatering unit and to the second storage vessel (114), for receiving material therefrom and producing a mixture of the dewatered waste material and encapsulation medium. Preferably, the dewatering unit includes a dewatering vessel and a pump for providing a degree of vacuum in the dewatering vessel. Preferably, the dewatering unit is operable for concentrating the waste material such that the dewatered waste material output is at about 40% v/v.

In one embodiment, the container comprises a main body and a separate lid member; the lid member being adapted for fixed attachment to the main body of the container, and inline mixer is provided in or on a lid member; such that when the lid member is fixedly attached to the main body of the container, the inline mixer is enclosed within the container.

In another embodiment, the container comprises unitary component with a main body and an integrally formed or fixedly attached lid member.

The inline mixer comprises a static inline mixer, for example provided with fixed internal vanes.

Preferably, the apparatus further includes a first pump disposed between the first vessel and the dewatering unit and/or a second pump disposed between the second vessel and the inline mixer. Preferably, the apparatus further includes a valve upstream of each of two inlet ports of the inline mixer.

The waste material may comprise sludge, liquid or semi solid material.

In one embodiment, the waste material comprises radioactive sludge from nuclear processing plant, and the encapsulation medium comprises grout. Preferably, the encapsulation medium is a cement-based grout, for example comprising a mixture of BFS and OPC or PFA and OPC.

In another embodiment, the waste material comprises VOCs, and the encapsulation medium comprises polymer compound.

According to another aspect of the present invention there is provided a system for encapsulating waste material for long term storage, comprising: the apparatus of any of claims 1 to 14 of the appended claims; and a container, the container comprising (i) a main body and separate lid member, or (ii) a unitary component with a main body and an integrally formed or fixedly attached lid member. The container may contain solid hazardous waste.

According to another aspect of the present invention there is provided a container for use in conjunction with the apparatus of any of claims 1 to 14 of the appended claims, or in the system of claim 15 or 16 of the appended claims; the container comprising: (i) a main body and separate lid member, or (ii) a unitary component with a main body and an integrally formed or fixedly attached lid member; wherein the inline mixer is disposed inside the container or on mounted an internal surface of the container, for example on an inner surface of the lid member.

According to another aspect of the present invention there is provided a method of encapsulating waste material in a container for long term storage, comprising: (a) providing a first storage vessel, for holding waste material; (b) providing a second storage vessel, for holding encapsulation medium; (c) providing a static vane inline mixer, coupled for receiving waste material, and coupled to the second storage vessel, (f) mixing the waste material and encapsulation medium in the inline mixer; (g) filling the container with the mixture output from the inline mixer, wherein (c) includes providing a container, wherein the inline mixer comprises a disposable component disposed inside the container or on mounted an internal surface of the container.

The method preferably further includes: (d) providing a dewatering unit, coupled to the first vessel, and (e) dewatering the waste material received from the first vessel and outputting dewatered waste material; wherein the inline mixer is coupled to the dewatering unit and to the second storage vessel, (f) comprises producing a mixture of the dewatered waste material and encapsulation medium. Preferably, the dewatering unit includes a dewatering vessel and (e) includes using a pump to provide a degree of vacuum in the dewatering vessel. Preferably, (e) includes concentrating the waste material such that the dewatered waste material output is at about 40% v/v.

In one embodiment, the container comprises a main body and a separate lid member; and (c) includes fixedly attaching the lid member to the main body of the container, and wherein inline mixer is provided in or on a lid member; such that when the lid member is fixedly attached to the main body of the container, the inline mixer is enclosed within the container.

In another embodiment, the container comprises unitary component with a main body and an integrally formed or fixedly attached lid member. The inline mixer comprises a static inline mixer, for example provided with internal vanes.

The method may further include: (h) pumping with a first pump the material output from the first vessel to the dewatering unit; and/or (i) pumping with a second pump the material output from the second vessel to the inline mixer.

The method may further include: (j) controlling the flow of material to the inline mixer using a valve upstream of each of two inlet ports of the inline mixer.

The waste material may comprise sludge, liquid or semi solid material.

In one embodiment, the waste material comprises radioactive sludge from nuclear processing plant, and the encapsulation medium comprises grout. Preferably, the encapsulation medium is a cement-based grout, for example comprising a mixture of BFS and OPC or PFA and OPC.

In another embodiment, the waste material comprises VOCs, and the encapsulation medium comprises polymer compound.

The method may further include preloading the container with solid hazardous waste.

The inventors have developed a versatile encapsulation plant, for use in the encapsulation of waste, particularly that arising in the Nuclear Industry. The design allows within a single process plant the capacity to condition both solid waste materials and sludge wastes (individually or in combination) into an encapsulated product form suitable for safe, long-term storage.

The process provides the equipment necessary to receive sludge wastes streams; dewater the sludge to remove excess water and concentrate the sludge; receive a pre-mixed wet encapsulation medium, or grout; transfer the dewatered sludge and grout into a static in-line mixer; depositing the 'mixed' sludge/grout stream into a waste container, drum or box suitable for long term storage.

The storage container, drum or box could also have been previously 'loaded' with solid wastes, thus allowing the encapsulation of these solid wastes using the sludge/grout mixed material.

Once the mixed sludge/encapsulation medium has been transferred into the storage container, drum or box, it is left undisturbed for a number of hours to allow 'curing'. This results in a container, drum or box containing a single solid mass of encapsulated waste suitable for storage.

The system may employ a standard cuboid storage box, giving
(i) a 25% volume utilisation increase for sludge waste compared to a 'large drum' lost paddle in-drum mixing system occupying the same floor area, and
(ii) a 60% increase compared with a drum stillage containing 4 in-drum mixed drums occupying the same floor area.

The design is versatile enough to be capable of filling drums and boxes in a range of sizes.

It has been found that circa 25%w/w sludge solids incorporation can be achieved for sludge type waste streams, compared with c. 15%w/w typical with in-drum mixing technology. These two aspects result in a dramatic reduction (greater than 50%) in the number of boxes containing conditioned sludge waste required to be stored, with the consequent large savings in lifetime costs.

An advantage of the invention is that it minimises the equipment within the cell (box), thus reducing radioactive/contamination area maintenance requirements and increasing availability and reliability. A key feature of the use of dewatering technology is, again, that minimal equipment is located within the cell.

An added advantage of the combined technologies is that large elements of the plant(s) may be fabricated off site, minimising the site installation activities, with the consequential reduction in worker radiation dose uptake during construction.

The plant and process may be configured to allow for a variety of different sludge waste streams. Both the dewatering plant and the in-line mixers parameters can be changed to allow this high degree of versatility. The dewatering technology uses techniques that re-uses water to transfer sludges, and hence minimises the consumption and potential contamination of clean water.

A further advantage of the invention is the use of a 'disposable' in-line mixer (i.e. the mixer is built into the box and remains in the box, encapsulated) simplifies the cleaning requirements for the process and eliminates the generation of secondary contaminated wash water waste

A further advantage of the invention lies in filling a 'square' box, as opposed to the existing in-drum mixing technologies; this allows much greater storage volumes to be achieved - a 25% volume utilisation increase compared to a 'large drum' lost paddle in-drum mixing system and a 60% increase compared with a drum stillage containing 4 in-drum mixed drums. Also, in addition a wide range of boxes, waste drums, smaller containers and larger containers can also be used and benefit from this technology.

The process can be integrated with the encapsulation of solid materials. The solid waste would be located in the box prior to encapsulation, the mixed sludge / encapsulation matrix is then added using the in-line mixing technology, thus encapsulating the solids in a sludge matrix compound. This ultimately reduces the number of boxes requiring long-term storage significantly, and cannot be provided by current in-drum mixing technologies.

An additional advantage of the invention is that it is not limited to a particular form of encapsulation medium.

Embodiments of the invention will now be described in detail, by way of example, with reference to the accompanying drawings, in which:
Figure 1 shows schematically a hazardous waste encapsulation system according to an embodiment of the invention;
Figure 2 shows in more detail (a) the main body of the container, and (b) the underside of the lid or of the topside of the container, in the encapsulation system of Fig. 1; and
Figure 3 depicts part of the encapsulation system of Fig. 1 in more detail, showing the connection of the dewatering system.

In the description and drawings, like numerals are used to designate like elements. Unless indicated otherwise, any individual design features and components may be used in combination with any other design features and components disclosed herein.

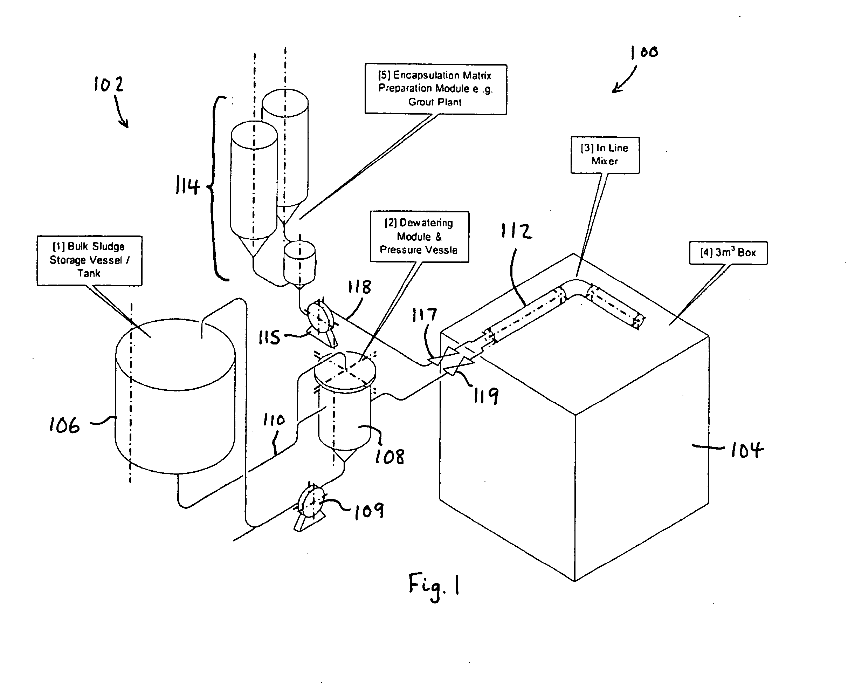

Figure 1 shows schematically a hazardous waste encapsulation system according to an embodiment of the invention.

For solid waste streams, the encapsulation medium, or grout, is prepared in an adjacent mixing plant and pumped directly to the encapsulation container or box 104.

For sludge waste streams (as in the embodiment of Fig. 1), the encapsulation apparatus 102 according to the invention, in preferred embodiments, makes use of a dewatering unit 108 for conditioning the sludge waste feed, and an in-line static mixer 112 to mix the sludge with a pre-mixed encapsulation medium or 'grout'. The dewatering unit 108 removes excess water from the sludge and is provided to allow the flexibility to receive a wide range of sludge type streams.

The sludge is transferred from a transit storage vessel 106 into the dewatering unit 108 via sludge waste feed 110. The dewatering unit suitably includes a pump 109, for providing a degree of vacuum within the container vessel of the dewatering unit 108.

Returning again to Fig. 1, a wet encapsulation medium prepared in an adjacent mixing plant 114 is then fed into the other input of the static in-line mixer 112. Whilst the most frequent medium to be employed is cement based grout, using combinations of Blast Furnace Slag (BFS) and Ordinary Portland Cement (OPC), the invention may also be used to encapsulate using other encapsulation media such as polymer compounds. The latter allows the potential to encapsulate sludges containing organics, i.e. VOCs etc.

Both the conditioned sludge feed 110 and encapsulation medium feed 118 are fed simultaneously into the static in-line mixer 112. Flow control systems are employed to ensure strict matching of the two flow rates to maintain the correct sludge to encapsulation medium ratio.

The process allows the maximum utilisation of a cuboid box volume (25% greater than the large in-drum mixing container and 60% greater than a drum stillage containing 4 in-drum mixed drums configuration) and an increased incorporation rate (∼25 wt%) of the sludge solids in grout.

As there are no moving parts within the box 104, the sludge bearing encapsulation medium can be used to encapsulate solid waste pre-loaded into the box 104.

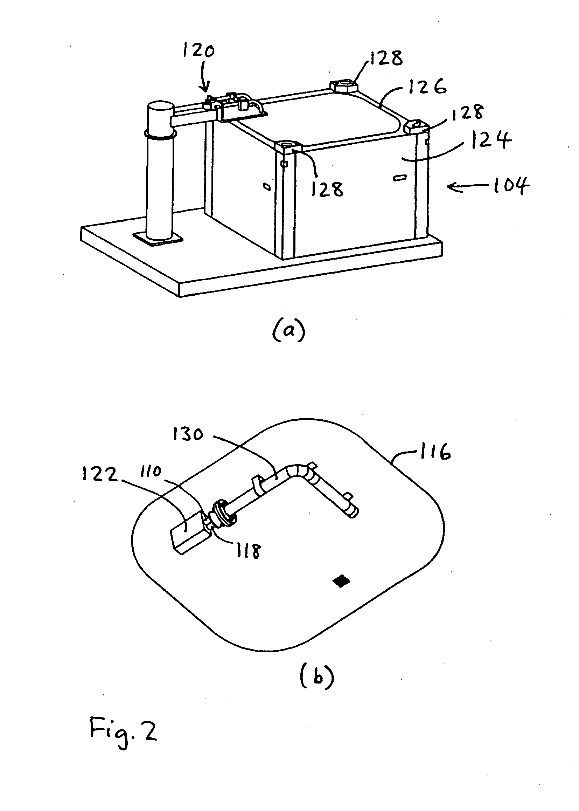

Figure 2 shows in more detail (a) the main body of the containe 104r, and (b) the underside of the lid or of the topside of the container, in the encapsulation system of Fig. 1.

The in-line mixer 112 may be located, as in the example shown here, inside the lid 116 of a NIREX 3m³ Box 104. As seen in Fig 2(a), a valve arrangement, generally designated 120, receives the feeds 110 and 118 (see Fig. 1; with one valve being provided for each feed line) and couples to an input port 122 of the inline mixer 112.

The main body 124 of the box 104 is generally cuboid with and upper edge 126 on which are provided guide/retention members 128 at each corner. The guide/retention members 128 assist in receiving and retaining the lid 116. It will be appreciated by persons skilled in the art that while the box 104 may be fabricated, delivered and/or used in the form of separate main body 124 and lid 116, it is also possible that the box 104 is fabricated/provided as an integral container, with the inline mixer mounted on the underside of the topside of the box.

Referring in particular to Fig. 2(b), a static in-line mixer 112 is used to mix the sludge and encapsulation medium upon transfer to the box 104. The in-line mixer 112 is for example a Chemineer Kenics Static KMS In-line mixer.

The in-line mixer 112 consists of a tube 130 and has no moving parts or components. The in-line mixer 112 is fed from two pipes, one (110) feeding the sludge, and one (118) feeding the wet encapsulation medium.

As the sludge and encapsulation medium pass through the tube 130 of the mixer, fixed elements or plates (not shown) inside the in-line mixer 112 cause the two streams to mix together, forming a homogenous stream of combined sludge and encapsulation medium. The resultant homogenous material then falls into the box 104. The box is filled to a predetermined level and left for a set period of time for curing. The combined sludge/ encapsulation medium then hardens to form a solid mass within the box 104.

As will be appreciated by persons skilled in the art, the diameter, length and number of elements within the in-line mixer can all be changed to give the process the versatility to encapsulate differing waste streams. These parameters may be controlled and set following initial 'proving trials'.

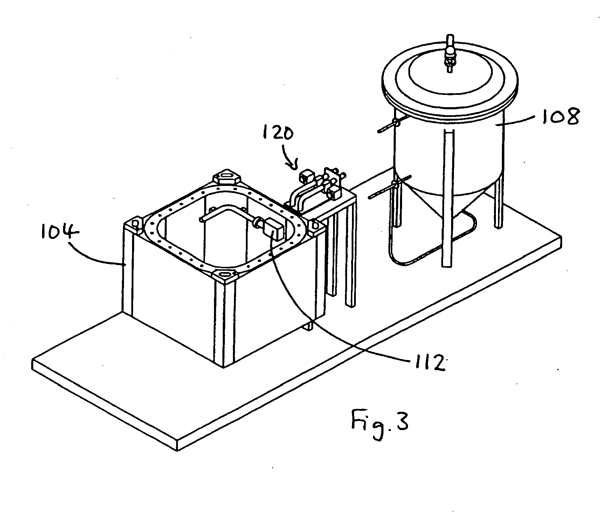

Figure 3 depicts part of the encapsulation system of Fig. 1 in more detail, showing the connection of the dewatering unit 108. The dewatering unit 108 removes excess water from the sludge, employing for example 'HydroTrans' technology (see UK patent applications Nos GB2389094A and GB2406293A), using fluid to mobilise and transport solids, thus removing supernate from the sludge and concentrating the sludge up to approx. 40%v/v, depending on the properties of the sludge. Next, the conditioned slurry/sludge is fed into one input of a static in-line mixer 112.

Referring to the dewatering unit 108, as stated previously, this system allows the removal of excess water from the sludge, thereby concentrating the sludge. The process is referred to as the AtmoTrans system. A separate filter system (i.e. 'Dynasep' system), and vortex arrangements can also be employed as necessary to provide filtration of finer slow settling particles (see the abovementioned UK patent applications).

For the dewatering unit 108, the selection and sizing of the equipment, vessels, pipework and valves is dependant on the characteristics of the sludge being recovered for encapsulation. A significant advantage of the overall process is its ability to handle waste streams with a wide range of characteristics, concentrations, particle size and make-up. As the dewatering principles are determined and known, this means that for a specific application the system will be tailored to match the sludge feed stream.

## Claims

1. An apparatus for encapsulating waste material in a container for long term storage, comprising:
a container;
a first storage vessel, for holding waste material;
a second storage vessel, for holding encapsulation medium;
a static vane in-line mixer, coupled for receiving waste material, and coupled to the second storage vessel, and producing, in use, a mixture of the waste material and encapsulation medium;
wherein the inline mixer is arranged for filling the container, and **characterised in that** the inline mixer comprises a disposable component disposed inside the container or mounted on an internal surface of the container.

2. The apparatus of claim 1, further including a dewatering unit, coupled for receiving waste material from the first vessel and outputting dewatered waste material;
wherein the inline mixer is coupled to the dewatering unit and to the second storage vessel, for receiving material therefrom and producing the mixture of the dewatered waste material and encapsulation medium.

3. The apparatus of claim 2, wherein the dewatering unit includes a dewatering vessel and pump for providing a degree of vacuum in the dewatering vessel.

4. The apparatus of claim 2 or 3, wherein the dewatering unit is operable for concentrating the waste material such that the dewatered waste material.output is at about 40% v/v.

5. The apparatus of any of the preceding claims, wherein the container comprises a main body and a separate lid member; the lid member being adapted for fixed attachment to the main body of the container, and inline mixer is provided in or on the lid member; such that when the lid member is fixedly attached to the main body of the container, the inline mixer is enclosed within the container.

6. The apparatus of claim 5, wherein the container comprises unitary component with a main body and an integrally formed or fixedly attached lid member.

7. A system for encapsulating waste material for long term storage, comprising:
the apparatus of any of the preceding claims;
the container comprising (i) a main body and separate lid member, or (ii) a unitary component with a main body and an integrally formed or fixedly attached lid member.

8. The system of claim 7, wherein the container contains solid hazardous waste.

9. A container for use in conjunction with the apparatus of any of claims 1 to 6, or in the system of claim 7 or 8; the container comprising:
(i) a main body and separate lid member, or (ii) a unitary component with a main body and an integrally formed or fixedly attached lid member; **characterised by** the container incorporating the in-line mixer disposed therein or mounted on an internal surface there of, for example on an inner surface of the lid member.

10. A method of encapsulating waste material in a container for long term storage, comprising:
(a) providing a first storage vessel, for holding waste material;
(b) providing a second storage vessel, for holding encapsulation medium;
(c) providing an in-line mixer, coupled for receiving waste material, and coupled to the second storage vessel,
(f) mixing the waste material and encapsulation medium in the inline mixer;
(g) filling the container with the mixture output from the inline mixer, **characterised in that** (c) includes providing a container, wherein the inline mixer comprises a disposable component disposed inside the container or mounted on an internal surface of the container.

11. The method of claim 10, further including:
(d) providing a dewatering unit, coupled to the first vessel, and
(e) dewatering the waste material received from the first vessel and outputting dewatered waste material;
wherein the in-line mixer is coupled to the dewatering unit and to the second storage vessel, (f) comprises producing a mixture of the dewatered waste material and encapsulation medium.

12. The method of claim 11, wherein the dewatering unit includes a dewatering vessel and (e) includes using a pump to provide a degree of vacuum in the dewatering vessel.

13. The method of claim 11 or 12, wherein (e) includes concentrating the waste material such that the dewatered waste material output is at about 40% v/v.

14. The method of any of claims 10 to 13, wherein the container comprises a main body and a separate lid member; and (c) includes fixedly attaching the lid member to the main body of the container, and wherein inline mixer is provided in or on a lid member; such that when the lid member is fixedly attached to the main body of the container, the inline mixer is enclosed within the container.

15. The method of any of claims 10 to 13, wherein the container comprises unitary component with a main body and an integrally formed or fixedly attached lid member.

## Patentansprüche

1. Vorrichtung zur Einkapselung von Abfallmaterial in einem Container zwecks Langzeitiagerung, umfassend:
einen Container;
einen ersten Lagerbehälter, zur Aufnahme von Abfallmaterial;
einen zweiten Lagerbehälter, zur Aufnahme von Einkapselungsmedium;
einen statischen Flügel-In-Line-Mischer, der zwecks Erhalt von Abfallmaterial gekoppelt ist, und der an den zweiten Lagerbehälter gekoppelt ist, und der, bei Einsatz, ein Gemisch aus dem Abfallmaterial und dem Einkapselungsmedium erzeugt;
wobei der In-Line-Mischer angeordnet ist, um den Container zu füllen, und **dadurch gekennzeichnet, dass** der In-Line-Mischer eine Einwegkomponente umfasst, die im Innern des Containers angeordnet oder auf einer Innenfläche des Containers montiert ist.

2. Vorrichtung nach Anspruch 1, weiterhin beinhaltend eine Entwässerungseinheit, die gekoppelt ist, um Abfallmaterial aus dem ersten Behälter zu erhalten und entwässertes Abfallmaterial auszugeben:
wobei der In-Line-Mischer an die Entwässerungseinheit und an den zweiten Lagerbehälter gekoppelt ist, um Material aus denselben zu erhalten und das Gemisch aus dem entwässerten Abfallmaterial und dem Einkapselungsmedium zu erzeugen.

3. Vorrichtung nach Anspruch 2, wobei die Entwässerungseinheit einen Entwässerungsbehälter und eine Pumpe beinhaltet, um einen Vakuumgrad im Entwässerungsbehälter anzulegen.

4. Vorrichtung nach Anspruch 2 oder 3, wobei die Entwässerungseinheit betreibbar ist, um das Abfallmaterial derart zu konzentrieren, dass die Ausgabe entwässerten Abfallmaterials bei etwa 40% v/v liegt.

5. Vorrichtung nach einem der vorstehenden Ansprüche, wobei der Container einen Hauptkörper und ein separates Deckelteil umfasst; wobei das Deckelteil zur festen Anbringung am Hauptkörper des Containers angepasst ist, und der In-Line-Mischer in oder auf dem Deckelteil vorgesehen ist; so dass der In-Line-Mischer, wenn das Deckelteil fest am Hauptkörper des Containers angebracht ist, im Container eingeschlossen ist.

6. Vorrichtung nach Anspruch 5, wobei der Container eine einheitliche Komponente mit einem Hauptkörper und einem integral geformten oder fest angebrachten Deckelteil umfasst.

7. System zur Einkapselung von Abfallmaterial zwecks Langzeitlagerung, umfassend:
die Vorrichtung nach einem der vorstehenden Ansprüche;
wobei der Container (i) einen Hauptkörper und ein separates Deckelteil, oder (ii) eine einheitliche Komponente mit einem Hauptkörper und einem integral geformten oder fest angebrachten Deckelteil umfasst.

8. System nach Anspruch 7, wobei der Container Feststoffsonderabfall enthält.

9. Container zur Verwendung in Verbindung mit der Vorrichtung nach einem der Ansprüche 1 bis 6, oder im System nach Anspruch 7 oder 8; wobei der Container umfasst:
(i) einen Hauptkörper und ein separates Deckelteil, oder (ii) eine einheitliche Komponente mit einem Hauptkörper und einem integral geformten oder fest angebrachten Deckelteil; **dadurch gekennzeichnet, dass** in den Container der In-Line-Mischer eingegliedert ist, der in demselben angeordnet ist oder auf einer Innenfläche desselben, beispielsweise auf einer Innenfläche des Deckelteils, montiert ist.

10. Verfahren zur Einkapselung von Abfallmaterial in einem Container zwecks Langzeitlagerung, umfassend:
(a) Bereitstellen eines ersten Lagerbehälters, zur Aufnahme von Abfallmaterial;
(b) Bereitstellen eines zweiten Lagerbehälters, zur Aufnahme von Einkapselungsmedium;
(c) Bereitstellen eines In-Line-Mischers, der zwecks Erhalt von Abfallmaterial gekoppelt ist, und der an den zweiten Lagerbehälter gekoppelt ist,
(f) Mischen des Abfallmaterials und des Einkapselungsmediums im In-Line-Mischer;
(g) Füllen des Containers mit dem Gemisch, das aus dem In-Line-Mischer ausgegeben wird, **dadurch gekennzeichnet, dass** (c) das Bereitstellen eines Containers beinhaltet, wobei der In-Line-Mischer eine Einwegkomponente umfasst, die im Innern des Containers angeordnet ist oder auf einer Innenfläche des Containers montiert ist.

11. Verfahren nach Anspruch 10, weiterhin beinhaltend:
(d) Bereitstellen einer Entwässerungseinheit, die an den ersten Behälter gekoppelt ist, und
(e) Entwässern des aus dem ersten Behälter erhaltenen Abfallmaterials und Ausgeben entwässerten Abfallmaterials;
wobei der In-Line-Mischer an die Entwässerungseinheit und an den zweiten Lagerbehälter gekoppelt ist, (f) das Erzeugen eines Gemischs aus dem entwässerten Abfallmaterial und dem Einkapselungsmedium umfasst.

12. Verfahren nach Anspruch 11, wobei die Entwässerungseinheit einen Entwässerungsbehälter beinhaltet und (e) das Verwenden einer Pumpe beinhaltet, um einen Vakuumgrad im Entwässerungsbehälter anzulegen.

13. Verfahren nach Anspruch 11 oder 12, wobei (e) das Konzentrieren des Abfallmaterials so beinhaltet, dass die Ausgabe entwässerten Abfallmaterials bei etwa 40% v/v liegt.

14. Verfahren nach einem der Ansprüche 10 bis 13, wobei der Container einen Hauptkörper und ein separates Deckelteil umfasst; und (c) das feste Anbringen des Deckelteils am Hauptkörper des Containers beinhaltet, und wobei der In-Line-Mischer in oder auf einem Deckelteil vorgesehen ist; so dass der In-Line-Mischer, wenn das Deckelteil fest am Hauptkörper des Containers angebracht ist, im Container eingeschlossen ist.

15. Verfahren nach einem der Ansprüche 10 bis 13, wobei der Container eine einheitliche Komponente mit einem Hauptkörper und einem integral geformten oder fest angebrachten Deckelteil umfasst.

## Revendications

1. Appareil destiné à l'encupsulation de déchets dans un conteneur en vue d'un stockage à long terme, comprenant :
un conteneur ;
une première cuve de stockage, adaptée pour contenir des déchets ;
une seconde cuve de stockage, adaptée pour contenir un support d'encapsulation ;
un mélangeur en ligne statique à pales, couplé de manière à recevoir les déchets, et couplé à la seconde cuve de stockage, et produisant, en fonctionnement, un mélange de déchets et de support d'encapsulation,
dans lequel le mélangeur en ligne est agencé pour remplir le conteneur, et **caractérisé en ce que** le mélangeur en ligne comprend un composant jetable disposé à l'intérieur du conteneur ou monté sur une surface intérieure du conteneur.

2. Appareil selon la revendication 1, comprenant en outre une unité de déshumidification, couplée de manière à recevoir les déchets provenant de la première cuve et à produire des déchets déshumidifiés ;
le mélangeur en ligne étant couplé à l'unité de déshumidification et à la seconde cuve de stockage, de manière à en recevoir les déchets et produire le mélange de déchets déshumidifiés et de support d'encapsulation.

3. Appareil selon la revendication 2, dans lequel l'unité de déshumidification comprend une cuve de déshumidification et une pompe destinée à fournir un certain niveau de vide dans la cuve de déshumidification.

4. Appareil selon la revendication 2 ou 3, dans lequel l'unité de déshumidification est susceptible de concentrer les déchets de sorte que la production de déchets déshumidifiés soit de l'ordre d'environ 40 % v/v.

5. Appareil selon l'une quelconque des revendications précédentes, dans lequel le conteneur comprend un corps principal et un élément de couvercle distinct ; l'élément de couvercle étant adapté pour être rattaché de manière fixe au corps principal du conteneur, et le mélangeur en ligne étant prévu dans ou sur l'élément de couvercle de manière que, lorsque l'élément de couvercle est fixement rattaché au corps principal du conteneur, le mélangeur en ligne soit renfermé à l'intérieur du conteneur.

6. Appareil selon la revendication 5, dans lequel le conteneur comprend un composant unitaire avec un corps principal et un élément de couvercle formé d'un seul tenant avec celui-ci ou qui y est fixement rattaché.

7. Système destiné à l'encapsulation de déchets en vue d'un stockage à long terme, comprenant :
l'appareil selon l'une quelconque des revendications précédentes ;
le conteneur comprenant (i) un corps principal et un élément de couvercle distinct, ou (ii) un composant unitaire avec un corps principal et un élément de couvercle formé d'un seul tenant avec celui-ci ou qui y est fixement rattaché.

8. Système selon la revendication 7, dans lequel le conteneur contient des déchets solides dangereux.

9. Conteneur destiné à une utilisation en conjonction avec l'appareil selon l'une quelconque des revendications 1 à 6, ou dans le système selon la revendication 7 ou 8 ; le conteneur comprenant:
(i) un corps principal et un élément de couvercle distinct, ou (ii) un composant unitaire avec un corps principal et un élément de couvercle formé d'un seul tenant avec celui-ci ou qui y est fixement rattaché ; **caractérisé par le fait que** le conteneur comprend le mélangeur en ligne disposé à l'intérieur de celui-ci ou monté sur une surface intérieure de celui-ci, par exemple sur une surface intérieure de l'élément de couvercle.

10. Procédé d'encapsulation de déchets dans un conteneur en vue d'un stockage à long terme, comprenant :
(a) la mise à disposition d'une première cuve de stockage, adaptée pour contenir des déchets ;
(b) la mise à disposition d'une seconde cuve de stockage, adaptée pour contenir un support d'encapsulation ;
(c) la mise à disposition d'un mélangeur en ligne, couplé de manière à recevoir les déchets, et couplé à la seconde cuve de stockage ;
(f) le mélange des déchets et du support d'encapsulation dans le mélangeur en ligne,
(g) le remplissage du conteneur avec le mélange produit par le mélangeur en ligne, **caractérisé en ce que** l'étape (c) comprend la mise à disposition d'un conteneur, le mélangeur en ligne comprenant un composant jetable disposé à l'intérieur du conteneur ou monté sur une surface intérieure du conteneur.

11. Procédé selon la revendication 10, comprenant en outre :
(d) la mise à disposition d'une unité de déshumidification, couplée à la première cuve, et
(e) la déshumidification des déchets reçus en provenance de la première cuve et la production des déchets déshumidifiés ;
le mélangeur en ligne étant couplé à l'unité de déshumidification et à la seconde cuve de stockage, l'étape (f) comprenant la production d'un mélange de déchets déshumidifiés et de support d'encapsulation.

12. Procédé selon la revendication 11, dans lequel l'unité de déshumidification comprend une cuve de déshumidification et l'étape (e) comprend l'utilisation d'une pompe permettant de fournir un certain niveau de vide dans la cuve de déshumidification.

13. Procédé selon la revendication 11 ou 12, dans lequel l'étape (e) comprend la concentration des déchets de sorte que la production des déchets déshumidifiés soit de l'ordre d'environ 40 % v/v.

14. procédé selon l'une quelconque des revendications 10 à 13, dans lequel le conteneur comprend un corps principal et un élément de couvercle distinct ; et l'étape (c) comprend le rattachement fixe de l'élément de couvercle au corps principal du conteneur, et dans lequel le mélangeur en ligne est prévu dans ou sur un élément de couvercle, de manière que, lorsque l'élément de couvercle est fixement rattaché au corps principal du conteneur, le mélangeur en ligne soit renfermé à l'intérieur du conteneur.

15. Procédé selon l'une quelconque des revendications 10 à 13, dans lequel le conteneur comprend un composant unitaire avec un corps principal et un élément de couvercle formé d'un seul tenant avec celui-ci ou qui y est fixement rattaché.
